# DEMANDE DE BREVET EUROPEEN

(11) **EP 1 772 318 A1**
(43) Date de publication de la demande: **11.04.2007**
(21) Numéro de dépôt: 06300928.6
(22) Date de dépôt: 06.09.2006
(51) Int. Cl.: B60R 13/04, F21S 8/10

(54) **Cache pour éclaireur de plaque d'immatriculation**

(30) Priorité: 10.10.2005 FR 0510326
(71) Demandeur: Peugeot Citroen Automobiles SA, 78943 Vélizy-Villacoublay Cedex (FR)
(72) Inventeur: Arnould, Etienne, 25200 Bethoncourt (FR)

(57) **Abrégé**

L'invention concerne principalement un cache destiné à être fixé à un élément de tôlerie (31) d'un véhicule automobile (27) pour couvrir partiellement un éclaireur (24, 24') de plaque d'immatriculation (26) de ce véhicule.

Ce cache comprend une paroi principale (39) délimitée par un bord d'appui (40) destiné à longer l'élément de tôlerie (31), cette paroi (39) comprenant une surface interne (42) pourvue d'un première (50a) et d'une seconde (50b) patte de fixation à l'élément de tôlerie (31) et dépassant de cette surface (42). Ce cache (1) comprend en outre un masque (41) porté par la première patte (50a) et la seconde patte (50b) pour intercepter des rayons lumineux émis par l'éclaireur (24) en direction du bord d'appui(40).

L'invention trouve application dans le domaine des véhicules automobiles comprenant un éclaireur de plaque d'immatriculation.

## Description

La présente invention concerne un cache pour éclaireur de plaque d'immatriculation d'un véhicule automobile, destiné à être fixé à un élément de tôlerie d'un véhicule automobile pour couvrir partiellement l'éclaireur de la plaque du véhicule.

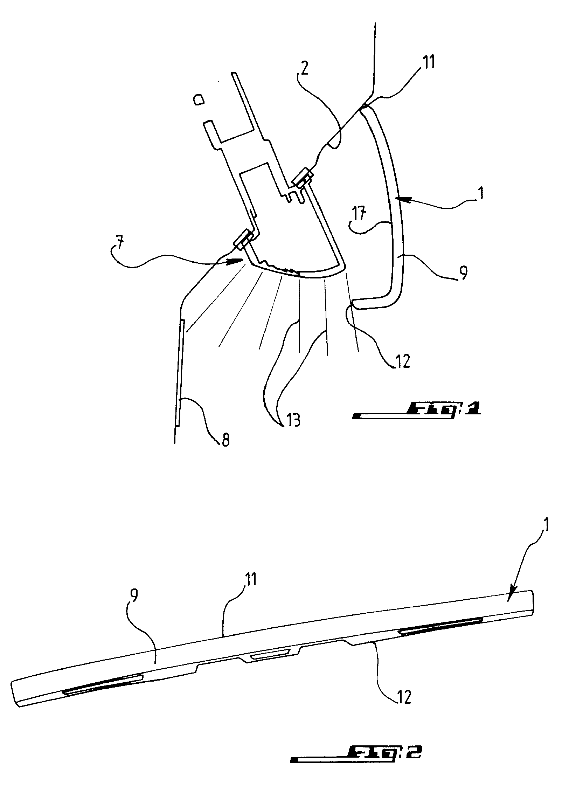

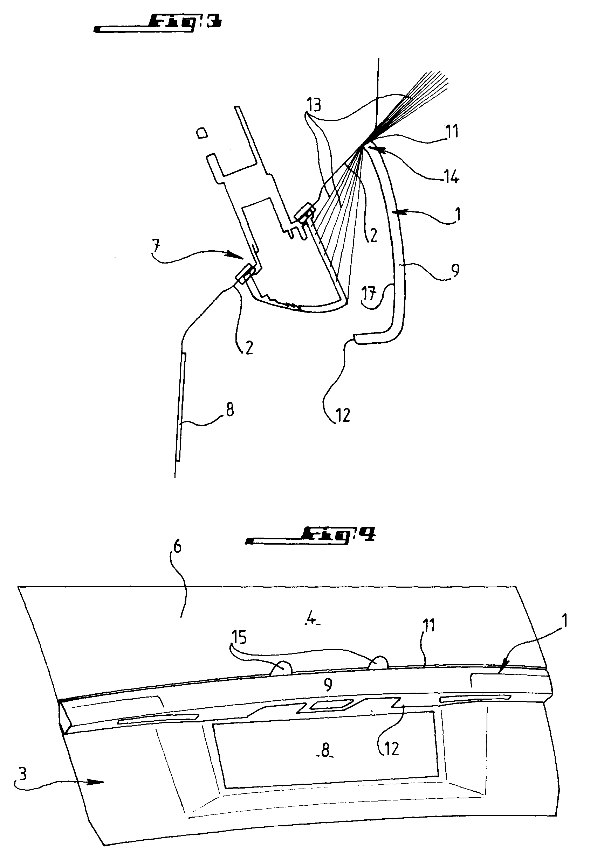

Un cache connu 1 de ce type est représenté sur les figures 1 et 2 et est destiné à être fixé à un élément de tôlerie 2 situé en partie basse 3 d'un hayon 4 d'un véhicule 6, pour couvrir partiellement deux éclaireurs 7 d'une plaque d'immatriculation 8 de ce véhicule 6, ces éclaireurs 7 étant situés selon une direction transversale du véhicule.

Le cache 1 comprend une paroi principale 9 présentant une forme générale de profilé s'étendant suivant une direction principale qui est parallèle à la direction transversale du véhicule lorsque le cache 1 est monté.

La paroi principale 9 est délimitée par un bord d'appui 11 destiné à longer l'élément de tôlerie 2 une fois le cache 1 monté, et un bord libre 12, opposé au bord d'appui 11 de la paroi 2, destiné à être situé sous les éclaireurs 7.

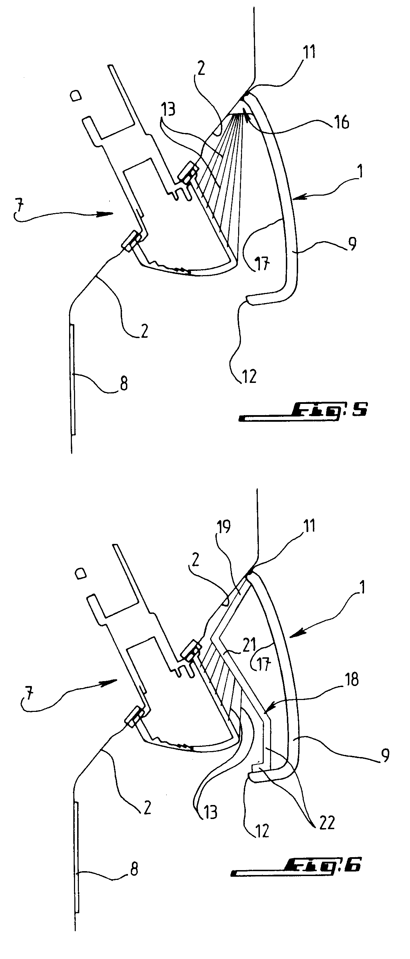

La plupart des rayons lumineux 13 émis par les éclaireurs 7 sont dirigés vers la plaque d'immatriculation 8 mais certains sont émis en direction du bord d'appui 11 de la paroi 9, comme l'illustre la figure 3.

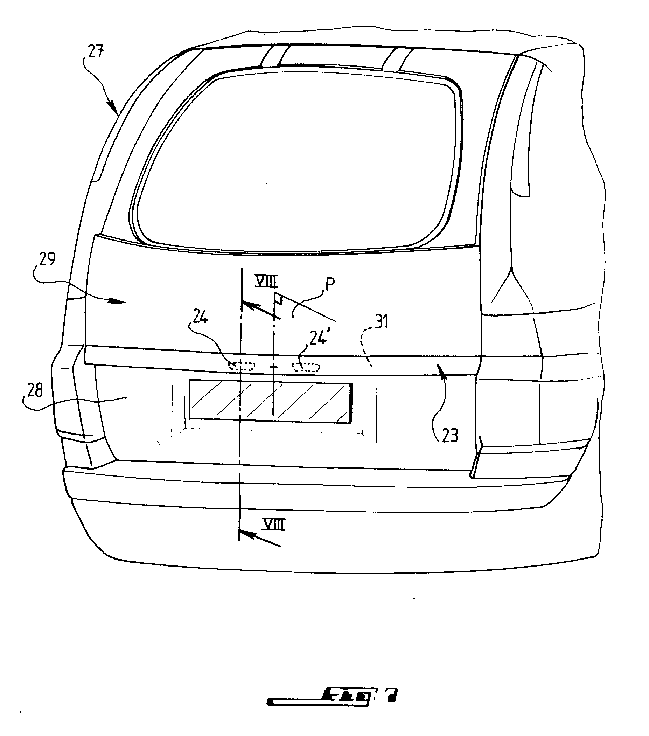

Par conséquent, lorsque ce bord 11 n'est pas plaqué contre l'élément de tôlerie 2, la lumière se propage au-dessus du cache 1 par l'interstice 14 compris entre le bord d'appui 11 et l'élément de tôlerie 2. Ceci génère des halos lumineux 15, représentés sur la figure 4, qui s'étendent au dessus du cache 1 et qui gênent d'autres conducteurs situés en arrière du véhicule 6.

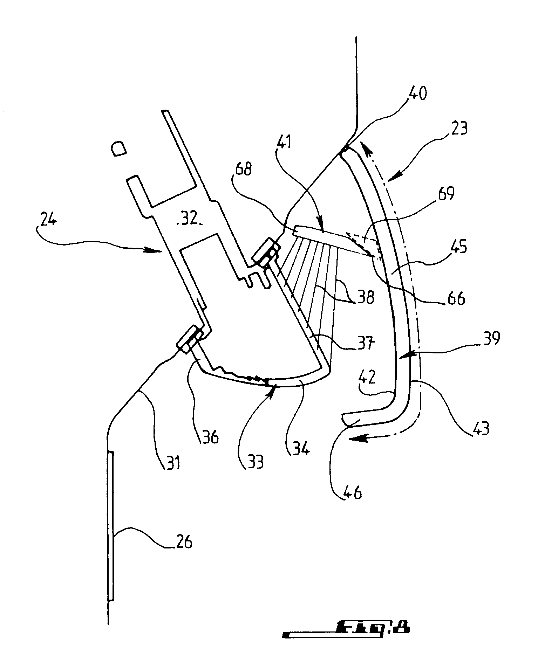

Une solution connue représentée sur la figure 5 consiste à poser une bande de mousse 16 sur la surface interne 17 de la paroi principale 9, au niveau du bord d'appui 11, de façon à obturer l'interstice 14.

Les inconvénients de cette solution sont le surcoût de la pose de la bande de mousse 16, l'imprécision de cette pose et la mauvaise tenue dans le temps de cette bande de mousse 16.

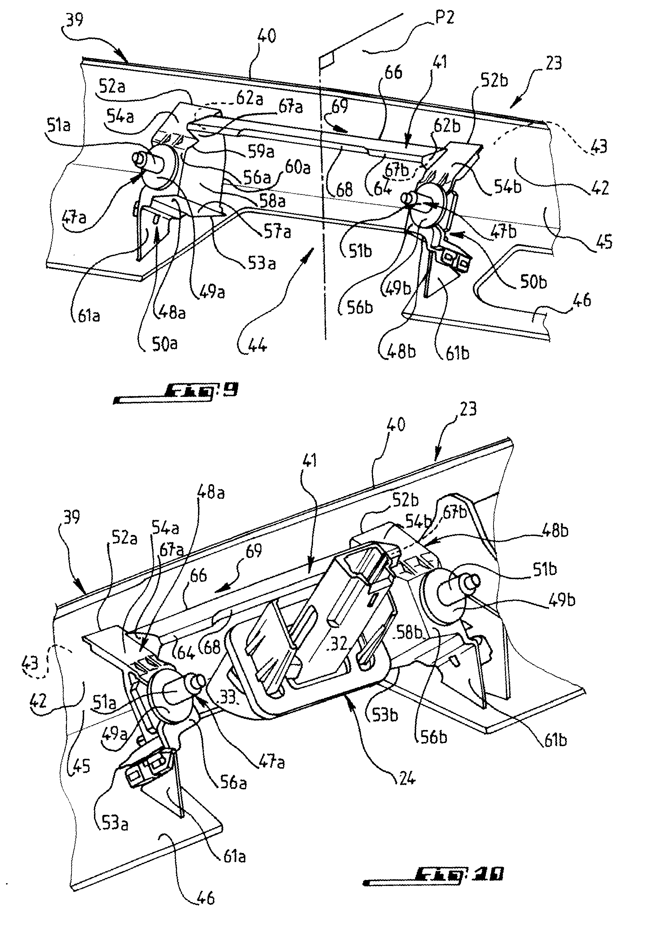

Une deuxième solution connue illustrée sur la figure 6 consiste à encliqueter un masque rapporté 18 à la surface interne 17 de la paroi principale 9. Ce masque 18 est un profilé comprenant trois bandes planes, formant une section dans un plan normal à la direction principale en forme de Z. L'une des bandes 19 est fixée à proximité du bord d'appui 11 de la paroi 9 et longe l'élément de tôlerie 2, une autre bande 21 intercepte les rayons lumineux se dirigeant vers l'interstice 14. La dernière bande 22 assure la fixation du profilé 18 au bord libre 12 la paroi principale 9.

Cette solution n'est pas non plus satisfaisante car la réalisation de ce masque et sa fixation à la paroi 9 engendrent également un surcoût de production.

Dans ce contexte, l'invention vise à remédier aux inconvénients ci-dessus.

A cet effet, l'invention a pour objet un cache destiné à être fixé à un élément de tôlerie d'un véhicule automobile pour couvrir partiellement un éclaireur de plaque d'immatriculation de ce véhicule, comprenant une paroi principale délimitée par un bord d'appui destiné à longer l'élément de tôlerie, cette paroi comprenant une surface interne pourvue d'un première et d'une seconde patte de fixation à l'élément de tôlerie et dépassant de cette surface, ce cache comprenant un masque porté par la première patte et la seconde patte pour intercepter des rayons lumineux émis par l'éclaireur en direction du bord d'appui.

Selon une autre caractéristique, la paroi principale et le masque sont formés d'une seule pièce, le masque étant espacé de la surface interne de la paroi par un évidement.

Selon encore une autre caractéristique, l'évidement est délimité par la surface interne de la paroi principale, et par un bord du masque qui est biseauté.

Selon une autre caractéristique, le masque a une forme générale de bande rectangulaire plane.

Selon encore une autre caractéristique, le cache est constitué en un matériau plastique.

L'invention sera mieux comprise et d'autres buts, avantages et caractéristiques de celle-ci apparaîtront clairement à la lecture de la description qui suit, faite en référence aux figures annexées parmi lesquelles :
- la figure 1 est une vue en coupe d'un cache connu ;
- la figure 2 est une vue en perspective du cache de la figure 1 ;
- la figure 3 est une vue en coupe montrant des rayons lumineux émis par l'éclaireur ;
- la figure 4 est une vue en perspective du cache de la figure 3 ;
- la figure 5 est une vue en coupe illustrant l'utilisation d'une bande de mousse connue ;
- la figure 6 est une vue en coupe illustrant l'utilisation connue d'un masque sous forme d'un profilé ;
- la figure 7 est une vue en perspective d'un véhicule muni d'un cache selon l'invention ;
- la figure 8 est une vue en coupe selon le plan VIII-VIII de la figure 7,
- la figure 9 est une vue en perspective du cache de la figure 8,
- la figure 10 est une vue en perspective du cache de la figure 8 avec l'éclaireur associé.

La présente invention propose un cache 23 pour au moins un éclaireur 24 d'une plaque d'immatriculation 26 d'un véhicule automobile 27.

La plaque d'immatriculation 26 du véhicule 27 est fixée à une partie basse 28 du hayon 29 du véhicule 27 lorsque celui-ci est rabattu.

Dans l'exemple représenté sur la figure 7, le cache 23 selon l'invention masque deux éclaireurs 24, 24' rigidement solidaires d'un élément de tôlerie 31 ménagé sur un hayon 29, situé au-dessus de la plaque 26.

Ces éclaireurs 24, 24' sont disposés selon une direction transversale du véhicule 27, en étant symétriques l'un de l'autre par rapport à un plan vertical P, si bien qu'un seul éclaireur 24 est décrit dans ce qui suit.

L'éclaireur 24 visible sur la figure 8 comprend un corps principal tubulaire 32 introduit dans une découpe réalisée dans l'élément de tôlerie 31, une source lumineuse émettant des rayons lumineux pour éclairer la plaque d'immatriculation 26, et une optique 33 formant un boîtier de protection de la source lumineuse.

L'optique 33 s'étend dans le prolongement du corps principal 32 de l'éclaireur 24 et comprend trois faces 34, 36, 37 transparentes. La première face 34 est située au dessus de la plaque 26, dans un plan perpendiculaire à celle-ci. La deuxième face 36 est située en regard de l'élément de tôlerie 31. Enfin, la troisième face 37 fait face au cache 23.

Les rayons lumineux 38 traversant les première et deuxième faces 34, 36 de l'optique 33 sont dirigés vers la plaque d'immatriculation 26.

Les rayons 38 traversant la troisième face 37 de l'optique 33 sont interceptés par le cache 23 pour ne pas gêner des conducteurs d'autres véhicules.

Le cache 23 selon l'invention comprend une paroi principale 39 qui couvre partiellement les éclaireurs 24, 24', et un masque 41 qui intercepte les rayons lumineux 38 dirigés vers le haut de l'élément de tôlerie 31.

La paroi principale 39 comprend un bord d'appui 40 destiné à longer l'élément de tôlerie 31. Elle présente une forme générale de profilé courbe s'étendant suivant une direction principale, en étant symétrique par rapport à un plan perpendiculaire à cette direction, correspondant au plan P de symétrie des éclaireurs 24, 24', si bien que seule la partie gauche de la paroi 39 est décrite dans ce qui suit.

Cette paroi 39 comprend une surface interne 42 destinée à être située en regard de l'éclaireur 24, et une surface externe 43 destinée à être dirigée vers l'arrière du véhicule.

La paroi 39 comprend une partie supérieure 45 située dans un plan vertical et en regard de l'optique 33 de l'éclaireur 24, et une partie inférieure 46 située sous l'optique 33, en étant perpendiculaire à la partie supérieure 45, de sorte que la paroi 39 couvre partiellement cette optique 33.

La partie inférieure 46 de la paroi 39 comprend deux découpes 44, 44' de passage des éclaireurs 24, 24'. Ces découpes 44, 44' sont rectangulaires et sont symétriques par rapport au plan P.

Le cache 23 comprend quatre pattes de fixation à l'élément de tôlerie, deux de ces pattes étant visibles sur la figure 9, en étant repérées par 50a et 50b. Chaque patte de fixation 50a, 50b comprend une languette de fixation portant une agrafe de fixation rapportée.

La figure 9 montre une première paire d'agrafes 47 montée sur une première paire de languettes 48, assurant la fixation de la partie gauche de la paroi 39 à l'élément de tôlerie 31.

La deuxième paire d'agrafes 47' et la deuxième paire de languettes 48', non représentée sur les figures, sont les symétriques de leurs homologues 47, 48 de la partie gauche par rapport au plan P, si bien que seules les paire 47 et 48 sont décrites dans ce qui suit.

Les agrafes 47a, 47b de la paire 47 sont disposées de part et d'autre de la découpe 44 en étant symétriques l'une de l'autre par rapport à un plan P2, perpendiculaire à la direction principale, et qui est également un plan de symétrie de la découpe 44.

Chaque agrafe est montée sur une languette de fixation 48a, 48b rigidement solidaire de la surface interne 42 de la paroi 39 et s'étendant suivant un plan perpendiculaire à la direction principale.

Dans la suite, seules l'agrafe 47a et la languette de fixation 48a sont décrites, attendu que l'agrafe 47b et la languette 48b qui sont simplement les symétriques de leurs homologues 48a, 48b par rapport au plan de symétrie P2.

L'agrafe 47a comprend une tête 49a pouvant être rigidement solidarisée à la languette 48a, et une partie en forme de tige 51a destinée à être encliquetée dans un trou non représenté, formé dans l'élément de tôlerie 31, pour assurer la fixation de la paroi principale 39.

La languette de fixation 48a s'étend suivant un plan perpendiculaire à la direction principale et comprend deux bords opposés 52a, 53a rigidement solidaires respectivement de la partie supérieure 45 et de la partie inférieure 46 du cache 23.

La languette 48a est formée de trois parties planes rectangulaires 54a, 56a, 57a, définissant une section suivant le plan P2 ayant une forme générale de U.

Les première 54a et troisième parties 57a de la languette constituent les branches du U et divergent légèrement l'une par rapport à l'autre. Ces parties 54a, 57a portent respectivement le bord 52a de la languette fixé à la partie supérieure 45 et le bord opposé 53a fixé à la partie inférieure 46 de la paroi 39.

La deuxième partie 56a de la languette 48a est destinée à accueillir l'agrafe 47a. Cette partie 56a de la languette 48a comprend une lucarne dans laquelle la tête 49 de l'agrafe 47a peut s'encliqueter, de sorte que la partie en forme de tige 51a de l'agrafe 47a dépasse de la languette 48a, en vue de la solidarisation de la paroi 39 au élément de tôlerie 31.

La languette de fixation 48a comprend encore un flanc 58a, perpendiculaire à la direction principale en étant rigidement solidaire d'un bord latéral 59a de la languette 48a, le plus proche de la découpe 44.

Le bord arrière 60a du flanc 58a est espacé de la surface interne 42 de la paroi principale 39 par un évidement afin de ne pas créer d'irrégularités sur la surface externe 43 de la paroi principale 39 par suite de surépaisseur de moulage.

De plus, la languette 48a comprend une nervure 61a située dans un plan perpendiculaire à la direction principale et s'étendant dans le prolongement de la troisième partie de la languette, à partir du bord latéral le plus éloigné de la découpe 44.

Les languettes 48a, 48b, 48a' et 48b' constituent deux à deux des supports de fixation pour les masques 41, 41' associés respectivement aux éclaireurs 24, 24', interceptant les rayons lumineux dirigés vers le bord d'appui 40 de la paroi 39.

La figure 10 illustre la partie gauche de la paroi 39, et met en évidence le masque gauche 41 associé à l'éclaireur 24. Le masque droit 41', non représenté, est le symétrique du masque gauche 41 par rapport au plan de symétrie P, si bien que seul le masque gauche 41 est décrit ci-dessous.

Le masque 41 a une forme générale de bande rectangulaire parallèle à la direction principale, en étant symétrique par rapport au plan P2.

Plus précisément, le masque 41 comprend deux bords latéraux 62a, 62b perpendiculaires à la direction principale et deux bords parallèles à cette direction, respectivement nommés bord avant 64 et bord arrière 66.

La longueur du masque 41 est légèrement supérieure à la distance séparant les deux flancs 58a, 58b de la languette 48a, 48b associés à une même découpe 44, de sorte que chaque bord latéral 62a, 62b est rigidement solidaire du flanc 58a, 58b situé en regard.

Plus particulièrement, chaque flanc 58a, 58b est prolongé par un support 67a, 67b du masque 41, les deux supports 67a, 67b étant rigidement solidaires des bords latéraux adjacents 62a, 62b du masque 41.

Les supports 67a, 67b maintiennent le masque 41 selon un plan perpendiculaire aux rayons lumineux de l'éclaireur 24 dirigés vers le bord d'appui 40.

Le bord avant 64 du masque 41 comprend une partie en retrait 68, s'étendant suivant la direction principale en étant symétrique par rapport au plan P2, permettant le passage de l'optique 33 de l'éclaireur 24 lors de la fixation du cache 23 a l'élément de tôlerie 31, tel que représenté sur la figure 10.

Le bord arrière du masque 41 est espacé de la surface interne 42 de la paroi 39 par un évidement 69, afin de ne pas générer de retassure ou autre défaut d'aspect au niveau de la surface externe 43 de la paroi principale 39.

Le cache 23 est constitué en un matériau plastique apte à être mis en forme par un procédé de moulage

Le cache 23 est formé en une seule pièce au moyen d'un moule, non illustré sur les figures, permettant la formation de la paroi 39, des languettes de fixation 48a, 48b, 48a', 48b' et des masques 41, 41'.

Ce moule comprend avantageusement une partie amovible, autrement nommée « tiroir » permettant la réalisation de l'évidement 69 compris entre le bord arrière 66 du masque 41 et la surface interne 42 de la paroi principale 39 et une coupe en biseau du bord arrière 66.

## Revendications

1. Cache destiné à être fixé à un élément de tôlerie (31) d'un véhicule automobile (27) pour couvrir partiellement un éclaireur (24, 24') de plaque d'immatriculation (26) de ce véhicule, comprenant une paroi principale (39) délimitée par un bord d'appui (40) destiné à longer l'élément de tôlerie (31), cette paroi (39) comprenant une surface interne (42) pourvue d'un première (50a) et d'une seconde (50b) patte de fixation à l'élément de tôlerie (31) et dépassant de cette surface (42), ce cache (1) comprenant un masque (41) porté par la première patte (50a) et la seconde patte (50b) pour intercepter des rayons lumineux émis par l'éclaireur (24) en direction du bord d'appui(40).

2. Cache dans lequel la paroi principale (39) et le masque (41) sont formés d'une seule pièce, le masque (41) étant espacé de la surface interne (42) de la paroi (39) par un évidement (69).

3. Cache selon la revendication 2, dans lequel l'évidement (69) est délimité par la surface interne (42) de la paroi principale (39), et par un bord (66) du masque (41) qui est biseauté.

4. Cache selon l'une des revendications précédentes, dans lequel le masque (41) a une forme générale de bande rectangulaire plane.

5. Cache selon l'une des revendications précédentes, **caractérisé en ce qu'**il est constitué en un matériau plastique.
